(19) Europäisches Patentamt
European Patent Office
Office européen des brevets

(11) EP 0 925 384 B1

(12) # EUROPÄISCHE PATENTSCHRIFT

(45) Veröffentlichungstag und Bekanntmachung des Hinweises auf die Patenterteilung:
**21.11.2001 Patentblatt 2001/47**

(21) Anmeldenummer: **97938785.9**

(22) Anmeldetag: **20.08.1997**

(51) Int Cl.[7]: **C23C 18/18**, C23C 18/30, C03C 17/38, C04B 41/81, C04B 41/90

(86) Internationale Anmeldenummer:
**PCT/DE97/01790**

(87) Internationale Veröffentlichungsnummer:
**WO 98/11273 (19.03.1998 Gazette 1998/11)**

(54) **MIT EDELMETALLSALZEN BEKEIMTE SUBSTRATE, VERFAHREN ZU IHRER HERSTELLUNG UND IHRE VERWENDUNG**

SUBSTRATES SEEDED WITH PRECIOUS METAL SALTS, PROCESS FOR PRODUCING THE SAME AND THEIR USE

SUBSTRATS ENSEMENCES DE SELS DE METAUX NOBLES, PROCEDE DE PRODUCTION ET UTILISATION DE CES SUBSTRATS

(84) Benannte Vertragsstaaten:
**CH DE FR GB LI NL**

(30) Priorität: **09.09.1996 DE 19636493**

(43) Veröffentlichungstag der Anmeldung:
**30.06.1999 Patentblatt 1999/26**

(73) Patentinhaber: **ROBERT BOSCH GMBH**
**70442 Stuttgart (DE)**

(72) Erfinder:
- **WEBER, Lothar**
  **D-70499 Stuttgart (DE)**
- **BRINZ, Thomas**
  **D-71069 Sindelfingen (DE)**
- **EISELE, Ulrich**
  **D-70199 Stuttgart (DE)**
- **KLING, Dorothee**
  **D-71229 Leonberg (DE)**

(56) Entgegenhaltungen:
**EP-A- 0 583 822** **WO-A-88/02412**
**US-A- 5 264 288** **US-A- 5 506 091**

- **HAMAYA T ET AL: "ELECTROLESS NICKEL DEPOSITION ON THE GLASS BEADS PRETREATED WITH AMINOSILANE - THE CORRELATION BETWEEN THE ADSORPTION STATES AND CATALYTIC ACTIVITY" SURFACE TREATMENT TECHNOLOGY ABSTRACTS, Bd. 32, Nr. 4, 1.Juli 1990, Seite 234 XP000109880**
- **PATENT ABSTRACTS OF JAPAN vol. 012, no. 132 (C-490), 22.April 1988 & JP 62 252343 A (MURATA MFG CO LTD), 4.November 1987,**
- **PATENT ABSTRACTS OF JAPAN vol. 013, no. 024 (C-561), 19.Januar 1989 & JP 63 227784 A (TOYOBO CO LTD), 22.September 1988,**
- **CHEMICAL ABSTRACTS, vol. 124, no. 20, 13.Mai 1996 Columbus, Ohio, US; abstract no. 271424, GRABAR, KATHERINE C. ET AL: "Two-Dimensional Arrays of Colloidal Gold Particles: A Flexible Approach to Macroscopic Metal Surfaces" XP002047646 & LANGMUIR (1996), 12(10), 2353-61 CODEN: LANGD5;ISSN: 0743-7463, 1996,**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 925 384 B1

## Beschreibung

### Stand der Technik

Die Erfindung betrifft ein Substrat nach der Gattung des Anspruchs 1, ein Verfahren zum Bekeimen nach der Gattung des Abspruchs 6, ein Pulver nach der Gattung des Anspruchs 12 und ein Verfahren zum Metallisieren nach der Gattung des Anspruchs 16.

Für Anwendungen in der Elektro- und Elektronikindustrie werden Metallschichten auf verschiedenartigen Substraten gebraucht. Ein preiswertes Verfahren zum Aufbringen von Metallschichten auf solche Substrate, das nicht von der Geometrie und der Leitfähigkeit des Substrats abhängt, ist die stromlose Metallisierung. Dieses Verfahren ist beispielsweise in Frederic A. Lowenheim: "Modern Electroplating", Verlag John Wiley & Sons, New York, und Heinz W. Dettner, J. Elze: "Handbuch der Galvanotechnik, Band II", Carl Hauser Verlag, München, beschrieben.

Bei der stromlosen Metallisierung wird die Oberfläche des zu metallisieren Substrats mit Edelmetallkeimen versehen. Gemäß dem Stand der Technik geschieht dies insbesondere durch Umsetzung von $Sn^{2+}$-haltigen mit $Pd^{2+}$-haltigen Verbindungen nach der Gleichung:

$$Sn^{2+} + Pd^{2+} \text{-->} Sn^{4+} + Pd.$$

Das Palladium kann dabei als wässrige $PdCl_2$-Lösung oder als eine organische Palladiumlösung vorliegen, in welche das Substrat getaucht oder mit der das Substrat besprüht oder bedruckt wird. Das Palladium ist adsorptiv an das Substrat gebunden. Außer Palladium wird auch Platin als Keimmetall verwendet, jedoch wird Palladium wegen seines niedrigen Preises bevorzugt. Auf der Keimschicht wird dann chemisch mindestens ein Metall abgeschieden, indem ein Salz des abzuscheidenden Metalls bzw. Salzes der abzuscheidenden Metalle reduziert wird (werden).

Nachteilig bei der bekannten Methode ist, daß es schwierig ist, eine gleichmäßige Bekeimung zu erzielen. Um sicherzustellen, daß die Keimschicht geschlossen ist, ist in jedem Fall eine bezogen auf die Substatoberfläche große Menge des Keimmetalls erforderlich. Außerdem ist die stromlose Metallisierung von Pulvern bisher nicht bekannt. Bei Versuchen haben die Erfinder festgestellt, daß bei Anwendung der bekannten Bekeimung und einer nachfolgenden stromlosen Metallisierung auf Pulver, die Bedeckung sehr ungleichmäßig war.

Aus Hamaya et al., "Electroless Nickel Deposition on the Glass Beads pretreated with Aminosilane - The Correlation between the Absorption States and Catalytic Activity", Surface Treatment Technologie Abstracts, Volume 32, No. 4, (1990), Seite 234, ist bekannt, ein Substrat in Form eines Glasbettes mit einem Aminosilan und Palladiumchlorid zu behandeln, so daß an die Oberfläche silyliert gebundene Palladiumionen entstehen. Auf derart vorbehandelten Oberfläche kann dann Nickel stromlos abgeschieden werden.

In US 5,264,288 ist weiter bereits vorgeschlagen worden, nichtleitende Substrate mit silylierten Polyamin-Edelmetallkomplexen (SPNM-Komplexe) zu beschichten, die anschließend in eine Metallsalzlösung eingebracht werden, um so eine stromlose Metallabscheidung auf der Oberfläche des Substrates zu erzielen. Unter einem SPNM-Komplex wird dabei ein Komplex verstanden, bei dem ein Edelmetall mit zwei bis sechs Aminogruppen komplexiert ist, wobei mindestens eine der Amimogruppen mit einem Alkoxysilan oder einem Hydroxysilan verbunden ist.

### Vorteile der Erfindung

Substrate nach der Gattung des Anspruchs 1, bei denen das Edelmetallsalz chemisch an die Substratoberfläche gebunden ist, sind mit einer gleichmäßig, weitgehend geschlossenen Keimschicht überzogen. Ihre Dicke beträgt maximal wenige Atomschichten. Deshalb ist der Bedarf an Keimmaterial pro Flächeneinheit gering. Bei einer nachfolgenden Metallisierung ist zur Sicherstellung einer gleichmäßigen, weitgehend geschlossenen Metallschicht entsprechend nur relativ wenig Metall erforderlich. Zur Anbindung der Keimschicht ist eine bindungsfähige Gruppierung $X\text{-}(K)_m$ vorgesehen, die mit dem Rest X über mindestens eine Sauerstoffbrücke an die Substratoberfläche gebunden ist, wobei die Gruppe K das Edelmetallsalz zu komplexieren vermag, und m eine ganze Zahl zwischen 1 und 3 und bevorzugt 1 ist. X ist aus der Gruppe Kohlenwasserstoffrest, Zirkonylrest, Titanylrest und aluminiumhaltiger Rest ausgewählt. Als funktionelle Gruppe K wird eine $\pi$-Funktion, wie eine Alkenyl-, Alkinyl- oder Arylgruppe, die ggf. substituiert sind, eingesetzt. Die Erfindung ist in vorteilhafter Weise auf oxidische Substrate und Substratmaterialien, welche eine oberflächliche Oxidhaut auszubilden vermögen, und dabei insbesondere auf Substratmaterialien anwendbar, die aus der Gruppe Glas, Keramik, Nitrid, Oxinitrid, Carbid, Silicid, Zirkonoxid, Nickeloxid, Aluminat, Aluminiumoxid, Kunststoff und Kombinationen von zwei oder mehr dieser Materialien ausgewählt sind. Besonders vorteilhaft ist, daß die Erfindung auch anwendbar ist, wenn das bekeimte Substrat als Pulver mit einer Teilchengröße im Bereich zwischen 100 nm und etwa 300 µm vorliegt. Der besondere Vorteil der Erfindung ist, daß nunmehr nicht nur ganzflächige Substrate sondern auch Pulver gezielter bekeimt, und dadurch auch gezielter metallisiert werden können. Insbesondere durch die Komplexierung läßt sich eine sehr feine, gleichmäßige Verteilung der Edelmetallkeime auf den Substratoberflächen erreichen. Das Edelmetall ist bevorzugt ein Metall der achten Nebengruppe, und besonders bevorzugt Palladium oder Platin, wobei Palladium, weil es billiger als Platin ist, am bevorzugtesten ist.

Zur Herstellung insbesondere des bekeimten erfinderischen Substrats eignet sich das Verfahren gemäß der Gattung des Anspruchs 6, bei dem das Edelmetallsalz chemisch an die Substratoberfläche gebunden wird. Dabei wird das Edelmetallsalz durch Vermittlung einer mindestens bifunktionellen Verbindung, die einerseits mit der Substratoberfläche und andererseits mit dem Edelmetallsalz eine Reaktion eingehen kann, an das Substrat gebunden. Im einzelnen wird dabei eine oxidische oder mit einer Oxidhaut überzogene Substratoberfläche mit einer Verbindung der allgemeinen Formel $(A)_n$-X-$(K)_m$ zur Reaktion gebracht,
worin A eine reaktive Gruppe ist, welche mit der Hydrathülle auf einem Oxid unter Ausbildung einer Sauerstoffbrücke zum Rest X reagieren kann, K eine das Edelmetall komplexierende Gruppe ist und n und m ganze Zahlen zwischen 1 und 3 sind, wobei n und m am bevorzugtesten je 1 sind, d.h. die Verbindung bifunktionell ist, und anschließend mit einer löslichen komplexen Edelmetallverbindung, die zum Ligandenaustausch mit der Gruppe K fähig ist, zur Reaktion gebracht und das Salz ggf. in an sich bekannter Weise reduziert. Dabei wird es bevorzugt, wenn X und K dieselbe Bedeutung wie in der Gruppierung X-$(K)_m$ (s. oben) haben, und A aus der Gruppe Halogen, Estergruppe, Carboxylgruppe und Säurehalogenidgruppe ausgewählt ist. Vorteilhafte Vertreter der genannten Verbindung sind aus der Gruppe Allydimethylchlorsilan, Öl- oder Linolsäure, Naphthensäuren und Aminopropylmethyldiethoxysilan ausgewählt.

Bei der Durchführung des Verfahrens ist es vorteilhaft, wenn das eingesetzte Edelmetallsalz mit einem Komplexbildner, wie Cyclooctadien oder Benzonitril, komplexiert ist, der zum Ligandenwechsel mit der funktionellen Gruppe K fähig ist. Zur Verbesserung der Haftung des Bekeimungsmaterials und zur Erleichterung der Reaktion der Substratoberfläche mit der bifunktionellen Verbindung ist es hilfreich, wenn das Substrat vor dem Bekeimen mit Aufschlußagenzien, wie Alkalimetallhydroxid, insbesondere mit Natriumhydroxid, oder flußsäurehaltigen Lösungen, wie Flußsäurelösungen oder $HF/NH_4F$-Gemische enthaltenden Lösungen, behandelt wird. Das erfindungsgemäße Verfahren läßt sich besonders vorteilhaft anwenden, wenn das Substratmaterial aus einem der oben angegebenen Materialien ausgewählt ist.

Mit der Erfindung läßt sich ein bekeimtes Pulver gemäß der Gatttung des Anspruchs 12 bereitstellen, das mit einer Metallschicht überzogen ist, wobei die Bekeimung chemisch an die Pulveroberfläche gebunden ist. Zur Anbindung der Bekeimungsschicht ist weiter eine bindungsfähige Gruppierung X-$(K)_m$ mit dem Rest über mindestens eine Sauerstoffbrücke an die Substratoberfläche
gebunden, wobei die funktionelle Gruppe K das Edelmetallsalz zu komplexieren vermag, und eine ganze Zahl zwischen 1 und 3 und bevorzugt 1 ist. Dabei wird X aus der Gruppe der Kohlenwasserstoffrest, Zirkonylrest, Titanylrest und aluminiumhaltiger Rest ausgewählt. Als funktionelle Gruppe K ist eine $\pi$-Funktion, wie eine Alkenyl-, Alkinyl- oder Arylgruppe, die ggf. substituiert ist, vorgesehen. Es ist günstig, wenn das Pulvermaterial aus einem Material besteht, das, wie Glas, Keramik, Nitrid, Oxinitrid, Carbid, Silicid, Zirkonoxid, Nickeloxid, Aluminat, Aluminiumoxid, Kunststoff oder einer Kombination von zwei oder mehr dieser Materialien, mit einer Hydrathülle überzogen ist, wobei Glas und Keramik besonders bevorzugt sind. Es ist vorteilhaft, wenn die Metallschicht eine Legierung wie Ni/W, Ni/Sn, Co/W und Co/Mo, ein einzelnes Metall, wie Ni, Cu, Ag, Au und Platinmetallen, oder Metalloxid(e), wie CuO und $Cu_2O$ enthält.

Bei der Sinterung der erfindungsgemäß metallisierten Pulver entsteht ein zweiphasiger Werkstoff, dessen leitfähige Phase kontinuierlich ist. Der elektrische Widerstand wird dabei über den Volumenanteil der netzwerkartig ausgebildeten leitfähigen Metallphase eingestellt. Dadurch ist der spezifische Widerstand des Werkstoffs in engen Grenzen und reproduzierbar einstellbar. Bei den bekannten Metall-Keramik-Verbundstoffen (Cermets) hingegen wird der elektrische Widerstand über die Perkolation zwischen Metallteilchen eingestellt. Dabei liegen Pulver und Metall in großen Anteilen nebeneinander vor. Um die Perkolation sicherzustellen, liegt beispielsweise bei der Pulvermetallisierung mit Platin der Gewichtsanteil des Platins im Metall-Pulvergemisch oberhalb 30 Gew.%.

Erfindungsgemäß läßt sich ein Verfahren zum Metallisieren gemäß der Gattung des Anspruchs 16, bei dem die Pulveroberfläche mit einem Edelmetallsalz bekeimt wird, wobei dieses chemisch an das Substrat gebunden ist, dazu verwenden, um eine Pulveroberfläche stromlos zu metallisieren. Dabei
wird gemäß dem oben beschriebenen Verfahren bekeimt, weil man dann nicht nur eine besonders gleichmäßige Bekeimung, sondern auch darauf basierend eine entsprechend gleichmäßige Metallisierung erhält. Anschließend wird in einem Bad stromlos metallisiert, welches ein Salz eines Metalls, das aufgebracht werden soll, bzw. Salze der Metalle, die aufgebracht werden sollen, und ein Reduktionsmittel enthält, dessen Reduktionspotential auf das Salz bzw. die Salze und ggf. des Edelmetallsalzes abgestimmt ist. Durch die Komplexierung entsteht dabei eine sehr feine gleichmäßige Oberfläche, d.h. eine geschlossene Metallschicht auf der Pulveroberfläche. Da die Keimschicht mit dem erfindungsgemäßen Bekeimungsverfahren auch auf der Oberfläche von Pulverkörnchen aufgebracht werden kann, lassen sich also - was bisher nicht möglich war - die Pulveroberflächen mit einer gleichmäßigen Metallschicht überziehen.

**Beschreibung der Ausführungsbeispiele**

In der folgenden Beschreibung wird erläutert, wie Glassubstrate in Form von Glasplatten oder Glaspulver mit Palladium bekeimt werden und dann mit einer Schicht aus Nickel/Wolfram überzogen werden. Es sei aber klargestellt, daß die Anwendung der Erfindung auf mit Palladium bekeimte und mit Nickel/Wolfram überzogene Glassubstrate zwar vorteilhaft, aber nicht auf diese Materialkombination beschränkt ist.

Ausgegangen wird von einer Glasplatte oder von Glaspulver mit Teilchengrößen im Bereich zwischen 100 nm und 300 µm als Substrat. Die Substratoberfläche wird bevorzugt mit einem Aufschlußagenzien, wie Natriumhydroxid, Flußsäure oder einem $HF/NH_4F$-Gemisch behandelt. Die Behandlung dient insbesondere zum Aufrauhen, um die Haftung der später aufgebrachten Keimschicht zu verbessern. Jedoch hat, wenn auf diese Behandlung verzichtet wird, die aufgebrachte Keimschicht trotzdem eine beachtliche Haftung. Das Substrat wird in eine 5%ige bis 30%ige, bevorzugt etwa 10%ige Lösung einer Verbindung der allgemeinen Formel $(A)_n$-X-$(K)_m$ in einem inhärenten Lösungsmittel, wie Chloroform, bei einer Temperatur zwischen 0 und 40°C bevorzugt
bei Raumtemperatur eingebracht und unter Rühren einige Stunden dort belassen. In der allgemeinen Formel $(A)_n$-X-$(K)_m$ stehen n und m je für eine ganze Zahl von 1 bis 3 und bevorzugt 1. A ist eine reaktive Gruppe, die mit der Glasoberfläche - genauer gesagt mit deren Hydrathülle - reagiert, während K eine π-Funktion, wie eine Allylgruppe, darstellt. Ein typischer Vertreter ist Allydimethylchlorsilan, das mit der Glasoberfläche unter Abspaltung von HCl und der Ausbildung einer Sauerstoffbrücke zur Glasoberfläche reagiert. Anschließend wird das Substrat aus der Lösung herausgezogen und getrocknet.

In der bifunktionellen Verbindung der allgemeinen Formel $(A)_n$-X-$(K)_m$ wird der Rest X weiter aus der Gruppe Kohlenwasserstoffrest, beispielsweise solche mit zwei bis zehn Kohlenstoffatomen, Zirkonylrest, Titanylrest und einem aluminiumhaltigen Rest ausgewählt, und mit mindestens einer funktionellen Gruppe K, wie einer Alkenyl-, Alkinyl- oder Arylgruppe, die ggf. substituiert sind, und mindestens einer reaktiven Gruppe A kombiniert, die aus der Gruppe Halogen, Estergruppe, Carboxylgruppe und Säurehalogenidgruppe ausgewählt ist. Eine derartige bifunktionelle Verbindung ist als Reaktant im ersten Reaktionsschritt der Bekeimung geeignet. Es bilden sich je nach dem Substratmaterial, beispielsweise Si-O-C-, Zr-O-C-, Ti-O-C-, C-O-C-, Ti-O-Ti-, Zr-O-Zr- oder Al-O-Al-Verknüpfungen zwischen dem Substrat und dem Rest X aus. Zu den Vertretern einsetzbarer Reaktanten, die im Handel erhältlich und/oder leicht herzustellen sind, gehören neben Allydimethylclorsilan - Vinylchlorsilane, Öl- und Linolsäure und Naphthensäuren.

Mit der im ersten Reaktionsschritt aktivierten Glasoberfläche wird ein organischer Komplex eines Edelmetallsalzes, der zum Ligandenwechsel mit der funktionellen Gruppe K fähig ist, wie $PdCl_2$·Benzolnitril oder $PdCl_2$·Cyclooctadien, zur Reaktion gebracht. Dazu wird die Glasoberfläche in eine Lösung des Komplexes in einem Lösungsmittel getaucht, das von derselben Art wie das im ersten Reaktionsschritt verwendete sein kann. Auch die Reaktionstemperatur und die Dauer der Reaktion können ähnlich wie beim ersten Reaktionsschritt sein. Es findet ein Ligandenwechsel statt, bei dem der Komplexbildner des Edelmetallkomplexes gegen die an das Substrat gebundene funktionelle Gruppe K ausgetauscht wird. Anschließend wird das Substrat aus der Lösung herausgezogen und getrocknet. Das Glassubstrat ist damit mit dem $PdCl_2$ bekeimt. Das $PdCl_2$ kann vor allem dem später folgenden Metallisierungsschritt, beispielsweise durch Umsetzung mit $NaBH_4$ oder anderen komplexen Boranen, oder erst während der stromlosen Metallisierung reduziert werden.

Zur Messung der pro g Substratmaterial abgeschiedenen Menge $PdCl_2$ wird das Substrat gewogen, anschließend $PdCl_2$ abgelöst und die Palladiummenge in der Lösung mittels Atomabsorptions- oder Atomemissionsspektroskopie bestimmt. Die mikroskopische Prüfung zeigt eine gleichmäßige Verfärbung der Substratoberfläche, was auf eine gleichmäßige Bekeimung schließen läßt. Legt man eine gleichmäßige Belegung der Oberfläche mit $PdCl_2$ bzw. Pd zugrunde so ergibt sich aus der auf dem Substrat festgehaltenen Pd-Menge und der zusätzlich ermittelten Substratoberfläche eine Belegung in der Größenordnung von 1 bis 10 Moleküllagen.

Zum Aufbringen einer aus einer Nickel/Wolfram-Legierung bestehenden Schicht auf das bekeimte Glaspulver wird dieses einer wässrigen Lösung ausgesetzt, welche ein Wolframsalz, bevorzugt ein Wolframat, ein Nickelsalz, bevorzugt Nickelsulfat, und ein Reduktionsmittel, wie Dialkylaminboran und ggf. andere Zusätze, wie ein Netzmittel, enthält. Dabei werden Nickel und Wolfram simultan auf der Keimschicht abgeschieden. Die Steuerung der Dicke der aufgebrachten Schicht erfolgt über die Reaktionstemperatur und die Reaktionsdauer. Die Reaktionstemperatur liegt vorzugsweise im Bereich zwischen etwa 60 und etwa 100°C und noch bevorzugter bei etwa 80°C. Die Reaktion wird unter alkalischen Bedingungen, bevorzugt bei einen pH-Wert zwischen 7,5 und 10,5 und besonders bevorzugt bei etwa 9 durchgeführt und dauert zwischen etwa 10 und etwa 30 Minuten.

Die hergestellten Metallschichten sind sehr gleichmäßig, was man durch Gefügeanalyse und 4-Punkt-Widerstandsmessungen in zwei zueinander senkrechten Richtungen an aus dem metallisierten Glaspulver durch Sintern hergestellten Platten und außerdem anhand rastermikroskopischer Aufnahmen und mittels optischer Mikroskopie feststellt. Die Dicken der aufgebrachten Schichten liegen je nach abgeschiedenem Metallmengen bzw. Reaktionszeiten zwischen dem Nanometer- und dem Mikrometerbereich. Zu ihrer Ermittlung werden die auf dem Substrat abgeschiedene und dann abgelöste Metallmenge mittels Atomemissions- bzw. Atomabsorptionsspektroskopie und die Pulveroberfläche mittels üblicher Methoden bestimmt.

Ebenso wie auf Glassubstrate läßt sich die Erfindung auch auf andere Substrate, die oxidisch sind oder eine oberflächliche Oxidhaut bilden, wie auf solche aus Keramik, Nitrid, Oxinitrid, Carbid, Silicid, Aluminat, Zirconoxid, Nikkeloxid, Aluminiumoxid, Kunststoff, beispielsweise Polyimide, Polyester, Urethane, Polyamide, Silicone, Acrylate, Styrole usw. und Kombinationen von zwei oder mehr dieser Materialien anwenden.

Als Lösungsmittel beim Bekeimen sind - außer Chloroform-auch andere, die sich leicht trocknen lassen, wie THF, Alkane, Diethylether und andere inhärente Lösungsmittel einsetzbar.

Außer Palladium eignen sich andere Edelmetalle, insbesondere solche der achten Nebengruppe, wie Platin, zum Bekeimen. Zu den Komplexbildnern für die Edelmetallsalze, die zum Ligandenwechsel mit der Funktion K fähig sind, gehören außer Cyclooctadien und Benzonitril insbesondere Butadiene und seine Derivate und Alkine.

Außer der Ni/W-Legierung können auch Schichten, die Legierungen, wie Ni/Sn, Co/W und Co/Mo, ein einzelnes Metall, wie Ni, Cu, Ag, Au und Platinmetalle, oder auch Metalloxid(e), wie CuO und $Cu_2O$, mit ähnlich vorteilhaften Eigenschaften auf die erfindungsgemäße Keimschicht aufgebracht werden. Bei der Umhüllung mit Kupfer wird das Pulver nach der Bekeimung zuerst mit UV-Licht zur Erzeugung von Sauerstoffverbindungen bestrahlt und dann mit einem Kupferbad bei Raumtemperatur metallisiert.

Im folgenden wird die Bekeimung und Metallisierung noch detaillierter in ihrem prinzipiellen Reaktionsablauf erläutert. Der Bekeimungsschritt wird dabei mit Hilfe einer siliciumorganischen Verbindung als Rest X erläutert. Anstelle einer silciumorganischen Verbindung kann jedoch erfindungsgemäß ebenso eine titanorganische oder zirkonorganische Verbindung eingesetzt werden.

**Bekeimung eines Glassubstrats (Glaspulver)**

Veranschaulicht werden die beiden Schritte der Bekeimung anhand der folgenden beiden Reaktionsgleichungen:

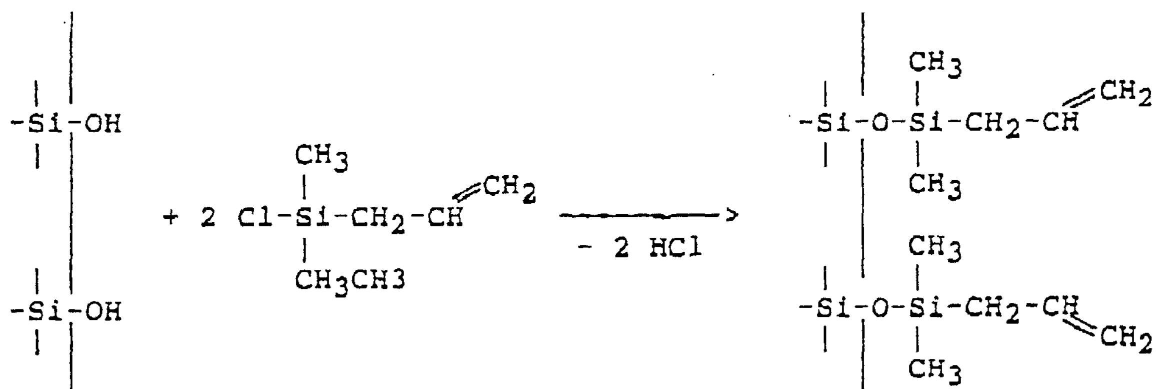


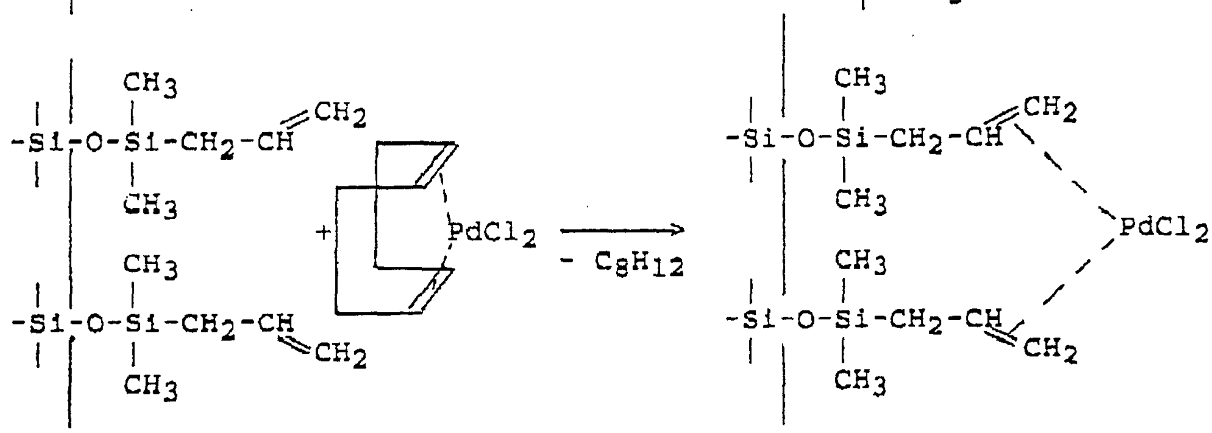


wobei die senkrechten langen Striche, die Substratoberfläche und das wannenförmige Gebilde Cyclooctadien darstellen sollen.

Glaspulver mit Teilchengrößen im Bereich zwischen etwa 60 µm und 200 µm wurde zum Aufrauhen der Oberfläche mit verdünnter Flußsäure aufgeschlossen, neutral gewachsen und getrocknet. 5 g des Pulvers wurden bei Raumtemperatur in 0,5 1 einer 10%igen Lösung von Allydimethylchlorsilan in Chloroform gegeben. Die Mischung wurde

über Nacht bei Raumtemperatur gerührt, wobei die durch die erste dargestellte Reaktionsgleichung veranschaulichte Reaktion ablief. Dann wurde die Lösung abgetrennt, und das Pulver mit Chloroform gewaschen und dann getrocknet.

Das getrocknete Pulver wurde mit 0,5 1 einer 10%igen Lösung des Cyclooctadienkomplexes von Palladiumchlorid in Chloroform zwölf Stunden lang bei Raumtemperatur unter Rühren behandelt. Dabei lief die durch die zweite dargestellte Reaktionsgleichung veranschaulichte Reaktion ab. Anschließend wurde die Lösung abgetrennt, und das Pulver mit Chloroform gewaschen und daraufhin getrocknet.

Die Prüfung unter dem Mikroskop zeigte, daß die Pulveroberfläche einheitlich gefärbt war, was darauf hindeutet, daß die Bekeimung gleichmäßig, d.h. einheitlich dick und weitgehend geschlossen ist. Es wurde auch die Pulveroberfläche und die abgeschiedene Menge Palladiumchlorid ermittelt und daraus die Schichtdicke des Palladiumchlorids berechnet, wobei eine einheitlich dicke, geschlossene Keimschicht zugrunde gelegt wurde. Die errechnete Schichtdicke lag bei fünf Moleküllagen.

**Metallisierung von bekeimtem Glaspulver**

10 g des in der vorstehenden Weise bekeimten Glaspulvers wurden in eine Lösung eingebracht, die aus

49,5 g $Na_2WO_4$,
65,4 g Na-Gluconat,
6,57 g $NiSO_4 \cdot 6H_2O$,
5,13 g Dimethylaminboran,
50 mg Thioharnstoff,
ca. 500 ml $H_2O$ und
ca. 75 ml einer 25%igen Ammoniaklösung

zusammengesetzt war. Die Lösung hatte einen ph-Wert von 9, war auf 80°C erhitzt und wurde gerührt. Nach zehn Minuten wurde die Lösung abgekühlt und anschließend vom Glaspulver getrennt. Das Glaspulver wurde mit Wasser gewaschen und dann getrocknet.

Unter dem Lichtmikroskop war zu sehen, daß die Pulverpartikel gleichmäßig mit einer Metallschicht überzogen waren. Mittels Atomabsorptionsspektroskopie wurde ermittelt, daß die Metallschicht aus einer Ni/W-Legierung im Gewichtsverhältnis 80:20 bestand, und daß die abgeschiedene Menge 0,2 g war. Bezogen auf das Gewicht des metallisierten Pulvers ergibt dies einen Anteil der Legierung von 2 Gew.%. Das metallisierte Pulver wurde unter Schutzgas zu einer Platte gesintert. Widerstandsmessungen an dieser Platte mittels der 4-Punktmethode in zwei zu einander senkrechten Richtungen ergaben einheitliche Widerstandswerte (der gemessene Wert lag bei 20□Ω).

**Patentansprüche**

1. Mit einem Edelmetallsalz bekeimtes Substrat, wobei das Edelmetallsalz chemisch über eine bindungsfähige Gruppierung $X\text{-}(K)_m$ mit einem Rest X über mindestens eine Sauerstoffbrücke an die Substratoberfläche gebunden ist, wobei die Gruppe K das Edelmetallsalz zu komplexieren vermag und m eine ganze Zahl zwischen 1 und 3 ist, **dadurch gekennzeichnet, daß** X aus der Gruppe Kohlenwasserstoffrest, Zirkonylrest, Titanylrest und aluminiumhaltiger Rest ausgewählt ist, und K eine π-Funktion wie eine Alkenyl-, Alkinyl-oder Arylgruppe, die gegebenenfalls substituiert ist, ist.

2. Substrat nach Anspruch 1, **dadurch gekennzeichnet, daß** m gleich 1 ist.

3. Substrat nach Anspruch 1 oder 2, **dadurch gekennzeichnet, daß** das Substratmaterial oxidisch ist oder oberflächlich eine Oxidhaut auszubilden vermag, und bevorzugt aus der Gruppe Glas, Keramik, Nitrid, Oxinitrid, Carbid, Silicid, Zirkonoxid, Nickeloxid, Aluminat, Aluminiumoxid und Kunststoffe oder aus einer Kombination von zwei oder mehr der genannten Materialien ausgewählt ist.

4. Substrat nach einem der Ansprüche 1 bis 3, **dadurch gekennzeichnet, daß** das Substrat als Pulver mit einer Teilchengröße im Bereich zwischen etwa 100 nm und etwa 300 µm vorliegt.

5. Substrat nach einem der Ansprüche 1 bis 4, **dadurch gekennzeichnet, daß** das genannte Edelmetall ein Metall der achten Nebengruppe, bevorzugt Palladium oder Platin, ist.

6. Verfahren zum Bekeimen von Substraten mit einem Edelmetallsalz, wobei das Substrat eine oxidische oder mit

einer Oxidhaut überzogene Substratoberfläche aufweist und das Edelmetallsalz chemisch durch Vermittlung einer mindestens bifunktionellen Verbindung der allgemeinen Formel $(A)\text{-}X\text{-}(K)_m$, die einerseits mit der oxidischen oder mit einer Oxidhaut überzogenen Substratoberfläche und andererseits mit dem Edelmetallsalz eine Verbindung eingehen kann, über eine chemische Reaktion an die Substratoberfläche gebunden wird, worin A eine reaktive Gruppe ist, welche mit der Hydrathülle auf dem Oxid unter Ausbildung einer Sauerstoffbrücke zum Rest X reagieren kann, K eine das Edelmetallsalz komplexierende Gruppe ist und n und m ganze Zahlen zwischen 1 und 3 sind, und anschließend mit einer löslichen komplexen Edelmetallverbindung, die zum Ligandenaustausch mit der Funktion K fähig ist, zur Reaktion gebracht und das Salz gegebenenfalls in an sich bekannter Weise reduziert wird, **dadurch gekennzeichnet, daß** X und K wie im Anspruch 1 definiert angegeben sind.

**7.** Verfahren nach Anspruch 6, **dadurch gekennzeichnet, daß** A aus der Gruppe Halogen, Estergruppe, Carboxylgruppe und Säurehalogenidgruppe ausgewählt wird.

**8.** Verfahren nach einem der Ansprüche 6 oder 7, **dadurch gekennzeichnet, daß** die mindestens bifunktionelle Verbindung aus der Gruppe Allyldimethylchlorsilan, Öl- oder Linolsäure, Naphthensäuren und Aminopropylmethyldiethoxysilan ausgewählt wird.

**9.** Verfahren nach einem der Ansprüche 6 bis 8, **dadurch gekennzeichnet, daß** das eingesetzte Edelmetallsalz mit einem Komplexbildner, insbesondere Cyclopentadien oder Benzonitril, komplexiert wird.

**10.** Verfahren nach einem der Ansprüche 6 bis 9, **dadurch gekennzeichnet, daß** das Substratmaterial aus einem der im Anspruch 3 angegebenen Materialien ausgewählt wird.

**11.** Verfahren nach einem der Ansprüche 6 bis 10, **dadurch gekennzeichnet, daß** das Substrat vor dem Bekeimen mit Aufschlußagenzien, wie Alkalimetallhydroxid, insbesondere mit Natriumhydroxid, oder flußsäurehaltigen Lösungen, wie Flußsäurelösungen oder $HF/NH_4F$-Gemische enthaltenden Lösungen, behandelt wird.

**12.** Mit einem Edelmetallsalz bekeimtes Pulver, wobei die Bekeimung mit einer Metallschicht überzogen und chemisch nach mindestens einem der Ansprüche 1, 2 oder 5 an die Pulveroberfläche gebunden ist.

**13.** Pulver nach Anspruch 12, **dadurch gekennzeichnet, daß** das Pulver aus einem der im Anspruch 3 offenbarten Materialien, bevorzugt aus Glas oder Keramik, besteht.

**14.** Pulver nach Anspruch 12 oder 13, **dadurch gekennzeichnet, daß** die Metallschicht eine Legierung, wie Ni/W, Ni/Sn, Co/W oder Co/Mo, ein einzelnes Metall, wie Ni, Cu, Ag, Au und Platinmetalle, oder Metalloxid(e), wie CuO und $Cu_2O$, enthält.

**15.** Pulver nach einem der Ansprüche 12 bis 14, **dadurch gekennzeichnet, daß** eine Teilchengröße im Bereich zwischen etwa 100 nm und etwa 300 µm hat.

**16.** Verfahren zum Metallisieren von Pulvern, wobei die Pulveroberfläche mit einem Edelmetallsalz bekeimt wird, das chemisch an die Pulveroberfläche gebunden ist, und anschließend stromlos metallisiert wird, **dadurch gekennzeichnet, daß** das Pulver zunächst nach mindestens einem der Ansprüche 6 bis 11 bekeimt und anschließend in einem Bad stromlos metallisiert wird, welches mindestens ein Salz mindestens eines Metalls, das aufgebracht werden soll, und ein Reduktionsmittel enthält, dessen Reduktionspotential auf das Salz bzw. die Salze und gegebenenfalls das Edelmetallsalz abgestimmt ist.

**17.** Verwendung eines metallisierten Pulvers nach Anspruch 16 zur Herstellung eines gesinterten, zweiphasigen Werkstoffes, insbesondere mit einer kontinuierlichen, leitfähigen Phase.

**18.** Verwendung eines metallisierten Pulvers nach Anspruch 16 zur Herstellung eines gesinterten, zweiphasigen Werkstoffes, dessen elektrischer Widerstand über den Volumenanteil einer netzartig ausgebildeten Metallphase einstellbar ist.

## Claims

**1.** Substrate seeded with a noble-metal salt, where the noble-metal salt is chemically bonded to the substrate surface

via at least one oxygen bridge via a group X-$(K)_m$ which contains a radical X and which is capable of bonding, where the group K is capable of complexing the noble-metal salt, and m is an integer between 1 and 3, **characterized in that** X is selected from the group consisting of a hydrocarbon radical, a zirconyl radical, a titanyl radical and an aluminium-containing radical, and K is a •-function, such as an alkenyl, alkynyl or aryl group, which is optionally substituted.

2. Substrate according to Claim 1, **characterized in that** m is equal to 1.

3. Substrate according to Claim 1 or 2, **characterized in that** the substrate material is oxidic or is capable of forming an oxide skin on the surface, and is preferably selected from the group consisting of glass, ceramic, nitride, oxynitride, carbide, silicide, zirconium oxide, nickel oxide, aluminate, aluminium oxide and plastics, or a combination of two or more of said materials.

4. Substrate according to one of Claims 1 to 3, **characterized in that** the substrate is in the form of a powder having a particle size in the range from about 100 nm to about 300 μm.

5. Substrate according to one of Claims 1 to 4, **characterized in that** said noble metal is a metal from the eighth sub-group, preferably palladium or platinum.

6. Process for seeding substrates with a noble-metal salt, where the substrate has an oxidic substrate surface or a substrate surface which is covered with an oxide skin, and the noble-metal salt is chemically bonded to the substrate surface via a chemical reaction promoted by an at least bifunctional compound of the general formula (A)-X-$(K)_m$ which is able to form a bond on the one hand with the oxidic substrate surface or the substrate surface covered with an oxide skin and on the other hand with the noble-metal salt, in which A is a reactive group which is able to react with the hydrate sheath on the oxide with formation of an oxygen bridge to the radical X, K is a group complexing the noble-metal salt, and n and m are integers between 1 and 3, and is subsequently reacted with a soluble complex noble-metal compound which is capable of ligand exchange with the function K, and the salt is, if desired, reduced in a manner known per se, **characterized in that** X and K are as defined in Claim 1.

7. Process according to Claim 6, **characterized in that** A is selected from the group consisting of a halogen, an ester group, a carboxyl group and an acid halide group.

8. Process according to one of Claims 6 and 7, **characterized in that** the at least bifunctional compound is selected from the group consisting of allyldimethylchlorosilane, oleic or linoleic acid, naphthenic acids and aminopropylmethyldiethoxysilane.

9. Process according to one of Claims 6 to 8, **characterized in that** the noble-metal salt employed is complexed with a complexing agent, in particular cyclopentadiene or benzonitrile.

10. Process according to one of Claims 6 to 9, **characterized in that** the substrate material is selected from one of the materials indicated in Claim 3.

11. Process according to one of Claims 6 to 10, **characterized in that** the substrate is, before seeding, treated with digestion agents, such as alkali metal hydroxide, in particular with sodium hydroxide, or solutions containing hydrofluoric acid, such as hydrofluoric acid solutions or solutions containing $HF/NH_4F$ mixtures.

12. Powder seeded with a noble-metal salt, where the seeding is covered by a metal layer and is chemically bonded to the powder surface in accordance with at least one of Claims 1, 2 and 5.

13. Powder according to Claim 12, **characterized in that** the powder consists of one of the materials disclosed in Claim 3, preferably glass or ceramic.

14. Powder according to Claim 12 or 13, **characterized in that** the metal layer comprises an alloy, such as Ni/W, Ni/Sn, Co/W or Co/Mo, an individual metal, such as Ni, Cu, Ag, Au and platinum metals, or metal oxide(s), such as CuO and $Cu_2O$.

15. Powder according to one of Claims 12 to 14, **characterized in that** it has a particle size in the range from about 100 nm to about 300 μm.

**16.** Process for the metallization of powders, in which the powder is seeded with a noble-metal salt which is chemically bonded to the powder surface, and is subsequently subjected to electroless metallization, **characterized in that** the powder is firstly seeded in accordance with at least one of Claims 6 to 11 and subsequently subjected to electroless metallization in a bath comprising at least one salt of at least one metal to be applied and a reducing agent whose reduction potential is matched to the salt or the salts and, where appropriate, the noble-metal salt.

**17.** Use of a metallized powder according to Claim 16 for the production of a sintered, two-phase material, in particular having a continuous, conductive phase.

**18.** Use of a metallized powder according to Claim 16 for the production of a sintered, two-phase material whose electrical resistance can be adjusted via the proportion by volume of a metal phase with a networklike structure.

**Revendications**

**1.** Substrat ensemencé avec un sel de métal noble, avec lequel le sel de métal noble est lié chimiquement par l'intermédiaire d'un groupement X-$(K)_m$ apte à la liaison, avec un reste X, par au moins un pont oxygène, sur la surface du substrat, dans lequel le groupe K peut complexer le sel de métal noble et m est un nombre entier compris entre 1 et 3,
**caractérisé en ce que**
X est choisi dans le groupe des restes d'hydrocarbure, des restes zirconyle, des restes titanyle et des restes contenant de l'aluminium, et K est une fonction π comme un groupe alkényle, alkinyle, ou aryle, qui est éventuellement substitué.

**2.** Substrat selon la revendication 1,
**caractérisé en ce que**
m est égal à 1.

**3.** Substrat selon la revendication 1 ou 2,
**caractérisé en ce que**
le matériau du substrat est oxydique ou permet de former à la surface une pellicule d'oxyde, et de préférence est choisi dans le groupe du verre, de la céramique, des nitrures, des oxynitrures, des carbures, des siliciures, de l'oxyde de zirconium, de l'oxyde de nickel, des aluminates, de l'oxyde d'aluminium, et des matières plastiques ou d'une combinaison de deux ou davantage des matériaux cités.

**4.** Substrat selon l'une quelconque des revendications 1 à 3,
**caractérisé en ce que**
le substrat se présente sous forme de poudre ayant une taille de particules dans la zone comprise entre environ 100 nm et environ 300 µm.

**5.** Substrat selon l'une quelconque des revendications 1 à 4,
**caractérisé en ce que**
le métal noble cité est un métal du $8^{ème}$ sous-groupe, de préférence le palladium ou le platine.

**6.** Procédé pour ensemencer des substrats avec un sel de métal noble, dans lequel le substrat possède une surface de substrat oxydique ou revêtue d'une pellicule d'oxyde, surface de substrat à laquelle est lié par une réaction chimique le sel de métal noble, par médiation chimique d'un composé au moins bifonctionnel de formule générale (A)-X-(K)m, qui peut induire une liaison d'une part avec la surface de substrat oxydique ou revêtue d'une pellicule d'oxyde, et d'autre part avec le sel de métal noble, dans lequel A est un groupe réactif qui peut réagir avec l'enveloppe d'hydrate sur l'oxyde par formation d'un pont oxygène vers le reste X, K est un groupe qui complexe le sel de métal noble, et n et m sont des nombres entiers compris entre 1 et 3, et ensuite on met en réaction avec un composé de métal noble complexe soluble, apte à l'échange de ligands avec la fonction K, et le sel est le cas échéant réduit d'une manière connue en soi,
**caractérisé en ce que**
X et K sont définis comme indiqué à la revendication 1.

**7.** Procédé selon la revendication 6,
**caractérisé en ce que**

A est choisi dans le groupe formé d'halogène, groupe ester, groupe carboxyle et groupe halogénure d'acide.

8. Procédé selon l'une des revendications 6 ou 7,
**caractérisé en ce que**
le composé au moins bifonctionnel est choisi dans le groupe formé d'allyldiméthyldichlorosilane, de l'acide oléique ou linoléique, des acides naphténiques et de l'aminopropylméthyldiéthoxysilane.

9. Procédé selon l'une quelconque des revendications 6 à 8,
**caractérisé en ce que**
le sel de métal noble mis en oeuvre est complexé par un agent complexant, en particulier le cyclopentadiène ou le benzonitrile.

10. Procédé selon l'une quelconque des revendications 6 à 9,
**caractérisé en ce que**
le matériau substrat est choisi parmi un des matériaux indiqués à la revendication 3.

11. Procédé selon l'une quelconque des revendications 6 à 10,
**caractérisé en ce qu'**
avant l'ensemencement on traite le substrat avec des réactifs de dissolution comme un hydroxyde de métal alcalin, en particulier avec l'hydroxyde de sodium, ou des solutions contenant des acides fluorhydriques, comme des solutions d'acide fluorhydrique ou des mélanges $HF/NH_4F$.

12. Poudre ensemencée avec un sel de métal noble,
dans laquelle l'ensemencement est revêtu d'une couche de métal et est lié chimiquement à la surface de la poudre selon au moins l'une quelconque des revendications 1, 2 ou 5.

13. Poudre selon la revendication 12,
**caractérisée en ce que**
la poudre consiste en un des matériaux divulgués à la revendication 3, de préférence du verre ou de la céramique.

14. Poudre selon la revendication 12 ou 13,
**caractérisée en ce que**
la couche métallique contient un alliage comme Ni/W, Ni/Sn, Co/W ou Co/Mo, un métal distinct comme Ni, Cu, Ag, Au, et les métaux de la famille du platine, ou un (ou des) oxyde(s) métallique(s) comme CuO et $Cu_2O$.

15. Poudre selon l'une quelconque des revendications 12 à 14,
**caractérisée en ce qu'**
elle a une taille de particules dans la zone comprise entre environ 100 nm et environ 300 $\mu$m.

16. Procédé de métallisation de poudres dans lequel la surface de la poudre est ensemencée avec un sel de métal noble, qui est lié chimiquement à la surface de la poudre et ensuite métallisé en l'absence de courant,
**caractérisé en ce que**
la poudre est ensemencée en premier lieu selon au moins l'une quelconque des revendications 6 à 11, et ensuite est métallisée dans un bain en l'absence de courant, qui contient au moins un sel d'au moins un métal qui doit être appliqué et un agent de réduction, dont le potentiel de réduction est mis en accord avec le sel ou les sels et le cas échéant avec le sel de métal noble.

17. Utilisation d'une poudre métallisée selon la revendication 16, pour la préparation d'un matériau diphasique fritté, en particulier avec une phase conductrice continue.

18. Utilisation d'une poudre métallisée selon la revendication 16 pour la préparation d'un matériau diphasique fritté, dont la résistance électrique est réglable par l'intermédiaire de la fraction en volume d'une phase métallique formée en réseau.